# EUROPEAN PATENT APPLICATION

(11) **EP 3 923 659 A1**
(43) Date of publication of application: **15.12.2021**
(21) Application number: 19914224.1
(22) Date of filing: 06.02.2019
(51) Int. Cl.: H04W 72/12, H04W 92/18

(54) **USER DEVICE AND COMMUNICATION METHOD**

(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP); WANG, Huan, Beijing, 100190 (CN); HOU, Xiaolin, Beijing, 100190 (CN)
(74) Representative: Hoffmann Eitle
(86) International application number: PCT/JP2019/004313
(87) International publication number: WO 2020/161844

(57) **Abstract**

Provided is a user equipment including a transmitting unit configured to transmit a scheduling request, and a receiving unit configured to receive a scheduling grant, wherein the scheduling request includes at least one of a header user equipment identifier, a transmitting user equipment identifier, and a receiving user equipment identifier.

## Description

### Technical Field

The present invention relates to a user equipment and a communication method in a wireless communication system.

### Background Art

In LTE (Long Term Evolution) and successor systems of LTE (for example, LTE-A (LTE Advanced), NR (New Radio) (also referred to as 5G)), a sidelink (which may also be referred to as D2D (Device to Device) technology) in which communication apparatuses such as UEs (communication apparatuses) communicate directly with each other without using a base station gNB has been studied (for example, see Non-Patent Document 1).

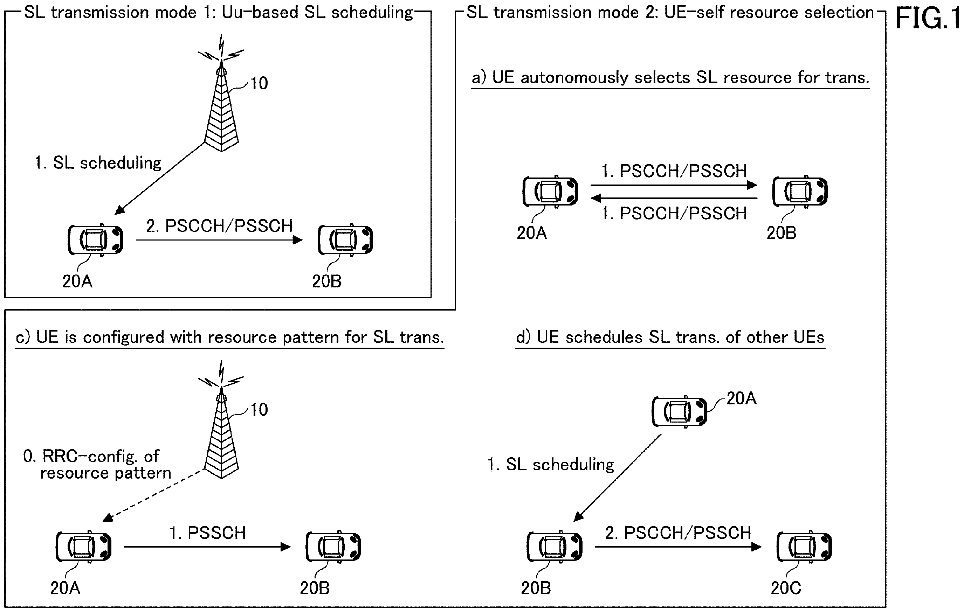

Realization of V2X (Vehicle to Everything) is being studied, and V2X is being developed into specifications. V2X is a part of ITS (Intelligent Transport Systems), and as illustrated in FIG. 1, V2X is a general term including V2V (Vehicle to Vehicle) meaning a form of communication performed between vehicles, a V2I (Vehicle to Infrastructure) meaning a form of communication performed between a vehicle and a road-side unit (RSU) installed at a roadside, a V2N (Vehicle to Nomadic device) meaning a form of communication performed between a vehicle and a mobile terminal of a driver, and a V2P (Vehicle to Pedestrian) meaning a form of communication performed between a vehicle and a mobile terminal carried by a pedestrian.

### Prior Art Document

### Non-Patent Document

[Non-Patent Document 1] 3GPP TS 36.213 V14.3.0 (2017-06)

### Summary of the Invention

### Problem to be Solved by the Invention

Channels for inter-terminal direct communication used in inter-terminal direct communication (side link technique) include the following channels.

A channel for transmitting control information such as SCI (Sidelink Control Information) is referred to as a PSCCH (Physical Sidelink Control Channel), and a channel for transmitting data is referred to as a PSSCH (Physical Sidelink Shared Channel). In addition, in NR-based V2X, it is specified to support HARQ (Hybrid Automatic Repeat Request) operation for PSCCH and PSCCH, and Sidelink Feedback Control Information (SFCI) including HARQ-ACK is defined. SFCI is transmitted on Physical Sidelink Feedback Channel (PSFCH).

As one of sidelink transmission modes of NR-V2X, it has been suggested that, in a user equipment group including a header user equipment and a member user equipment, the header user equipment schedules the member user equipment. The transmission mode may be referred to as a sidelink transmission mode 2-d or may be referred to as a different name. The header user equipment may be referred to as a scheduling user equipment and the like, and the member user equipment may be referred to as a non-header user equipment, a non-scheduling user equipment, and the like.

However, a signaling of a resource request from a member user equipment to a header user equipment is not specified. Also, a signaling of a resource grant from a header user equipment to a member user equipment is also not specified.

The present invention has been made in view of the above issues, and it is an object of the present invention to provide a technique for specifying a signaling of a resource request from a member user equipment to a header user equipment in inter-terminal direct communication. It should be noted that the present invention is not limited to inter-terminal communication in V2X, and may be applied to any terminal.

### Means for Solving Problem

According to the technique of the present disclosure, provided is a user equipment including a transmitting unit configured to transmit a scheduling request, and a receiving unit configured to receive a scheduling grant, wherein the scheduling request includes at least one of a header user equipment identifier, a transmitting user equipment identifier, and a receiving user equipment identifier.

### Effect of the Invention

According to the technique of the present disclosure, a technique for specifying a signaling of a resource request from a member user equipment to a header user equipment in inter-terminal direct communication is provided.

### Brief Description of Drawings

FIG. 1 is a drawing for explaining four types of sidelink transmission modes in NR-V2X;
FIG. 2 is a drawing for explaining a user equipment group;
FIG. 3 is a drawing for explaining receiving user equipment identifiers;
FIG. 4 is a drawing for explaining one or more stages of signaling;
FIG. 5 is a drawing for explaining a signaling transmission resource;
FIG. 6 is a drawing for explaining option 1 of signaling transmission resource;
FIG. 7 is a drawing illustrating an example of a functional configuration of a base station apparatus 10 according to an embodiment;
FIG. 8 is a drawing illustrating an example of a functional configuration of a user equipment 20 according to an embodiment; and
FIG. 9 is a drawing illustrating an example of a hardware configuration of a base station apparatus 10 and a user equipment 20 according to an embodiment.

### Mode for Carrying Out the Invention

An embodiment of the present invention will be hereinafter described with reference to drawings. The embodiment described below is an example, and the embodiment to which the present invention is applied is not limited to the following embodiment.

### <Sidelink transmission mode>

A sidelink transmission mode in NR-V2X will be explained.

FIG. 1 is a drawing for explaining four types of sidelink transmission modes in NR-V2X.

In a sidelink transmission mode 1 of NR-V2X, a user equipment 20A transmits PSCCH or PSSCH to a user equipment 20B on the basis of SL scheduling by a base station apparatus 10.

In sidelink transmission mode 2 of NR-V2X, PSCCH or PSSCH is transmitted based on resource selection performed by the user equipment itself. The sidelink transmission mode 2 of NR-V2X is further divided, and in sidelink transmission mode 2-a of NR-V2X, the user equipment 20A transmits PSCCH or PSSCH to the user equipment 20B on the basis of resource selection performed by the user equipment 20A, and the user equipment 20B transmits PSCCH or PSSCH to the user equipment 20A on the basis of resource selection performed by the user equipment 20B. In sidelink transmission mode 2-c of NR-V2X, the user equipment 20A transmits PSSCH to the user equipment 20B in accordance with RRC-config of a resource pattern notified from the base station apparatus 10 or determined by specifications.

In sidelink transmission mode 2-d of NR-V2X, the user equipment 20A performs scheduling for transmission from the user equipment 20B by transmitting SL scheduling to the user equipment 20B, and the user equipment 20B transmits PSCCH or PSSCH to the user equipment 20A on the basis of the scheduling.

### <User equipment group>

A user equipment group (UE group) will be explained.

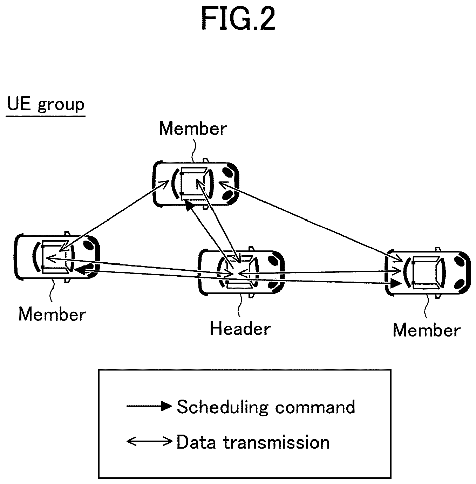

FIG. 2 is a drawing for explaining a user equipment group. As an architecture for implementing the sidelink transmission mode 2-d, resource allocation based on user equipment scheduling (UE-scheduling based resource allocation) explained below has been suggested.
1. Determine header user equipment (header-UE).
2. Associate member user equipment (member-UEs) with header user equipment (i.e., form a user equipment group (UE group)).
3. Determine resource(s) and resource set(s) used for each user equipment group.
4. The header user equipment schedules, to the member user equipment, a resource in the resource set allocated to the user equipment group.

In the above "3.", resource interference between user equipment groups can be reduced by allocating resource sets orthogonal to each other to multiple adjacent user equipment groups.

In the above "4.", each header user equipment is assumed to perform independent scheduling. The algorithm of the scheduler depends on the implementation of the user equipment. For scheduling, a procedure including a sidelink scheduling request and a notification indicating a scheduled resource is assumed.

### <Signaling of resource request>

A signaling of a resource request according to the present embodiment will be explained.

In a signaling of a resource request according to the present embodiment, the transmitting user equipment (transmitter-UE) requests (re)allocation and (de)activation of a resource by transmitting scheduling request and assistance information to the header user equipment.

Instead of the transmitting user equipment, the receiving user equipment may transmit assistance information to the header user equipment.

The transmitting user equipment may be one of the member user equipments in the user equipment group, and the receiving user equipment may also be one of the member user equipments.

The transmitting user equipment may be a user equipment for transmitting PSCCH and/or PSSCH and/or PSFCH, and the receiving user equipment may be a user equipment for receiving PSCCH and/or PSSCH and/or PSFCH.

The assistance information may be transmitted in response to an instruction from the header user equipment or a predetermined event as a trigger.

### <Header user equipment identifier, transmitting user equipment identifier, receiving user equipment identifier>

The signaling of the resource request includes at least one of a header user equipment identifier, a transmitting user equipment identifier, and a receiving user equipment identifier.

The identifier may be a UE ID or an RNTI (Radio Network Temporary Identifier), or may be a part of a UE ID or a part of an RNTI.

In particular, the header user equipment identifier may be a resource set ID, an SSID, a user equipment group ID, a user equipment cluster ID, or a virtual ID.

It should be noted that a pair of virtual IDs may be defined, the virtual IDs may be configured (in advance) for the header user equipment, or may be selected by the header user equipment. For example, the header user equipment may notify an ID of the header user equipment via PSBCH (Physical Sidelink Broadcast Control Channel).

An identifier may be reflected in scrambling in signaling, or an identifier field may be explicitly provided in signaling. Alternatively, a method for applying scrambling on the basis of any one of the identifiers and explicitly inserting the other identifiers into signaling may be used.

It should be noted that the transmitting user equipment may be a member user equipment in the user equipment group.

The transmitting user equipment may be a user equipment transmitting PSCCH and/or PSSCH and/or PSFCH, or the receiving user equipment may be a user equipment for receiving PSCCH and/or PSSCH and/or PSFCH.

Also, the receiving user equipment may be a header user equipment.

As described above, by including the header user equipment identifier and the transmitting user equipment identifier into signaling of a resource request, the user equipment transmitting the resource request and the transmission destination of the resource request can be clarified, and scheduling can be executed without error.

### <Receiving user equipment identifier>

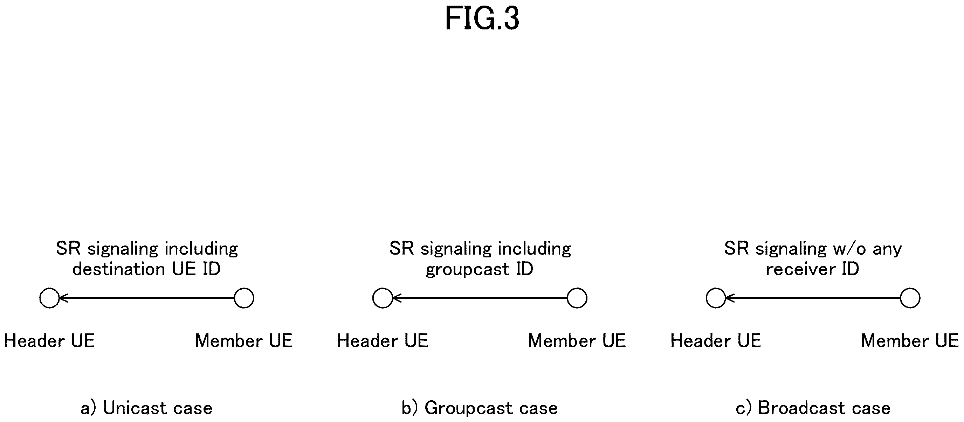

FIG. 3 is a drawing for explaining receiving user equipment identifiers.

The receiving user equipment identifier is transmitted as described below according to a transmission type.

In a case where the transmission type is a unicast, the receiving user equipment identifier may be a transmission destination user equipment identifier (for example, an identifier of the header user equipment or another member user equipment) or empty (for example, all zero).

In a case where the transmission type is a groupcast, the receiving user equipment identifier may be a groupcast identifier (groupcast ID) or empty (for example, all zero).

In a case where the transmission type is broadcast, the receiving user equipment identifier may be empty (for example, all zero).

Transmission of the receiving user equipment identifier in signaling of a resource request is effective (beneficial) in the following points.

That is, the receiving user equipment identifier is effective in determining a resource, MCS (Modulation and Coding Scheme), and the like.

In addition, scheduling time-division-multiplexed resources for a communication pair is effective for mitigating half-duplex issue (i.e., only one of transmission and reception can be executed at any given time) in transmission of unicast or groupcast.

### <Assistance information>

Assistance information will be explained.

The transmitting user equipment can signal assistance information in addition to signaling of a resource request. The assistance information may include BSR (Buffer Status Report), QoS parameter (for example, 5QI (5G QoS Identifier), latency, reliability, range, priority), congestion level (for example, CBR (Congestion Busy Ratio)), receiving user equipment identifier (receiver ID), transmission type (for example, unicast, groupcast, broadcast), and the like. As described above, by signaling assistance information in addition to signaling of a resource request, an effect of allocating more appropriate resources with regard to reliability, precedence, and the like can be expected.

It can be assumed that transmission of signaling (signaling transmission) of a resource request is performed in one or more stages.

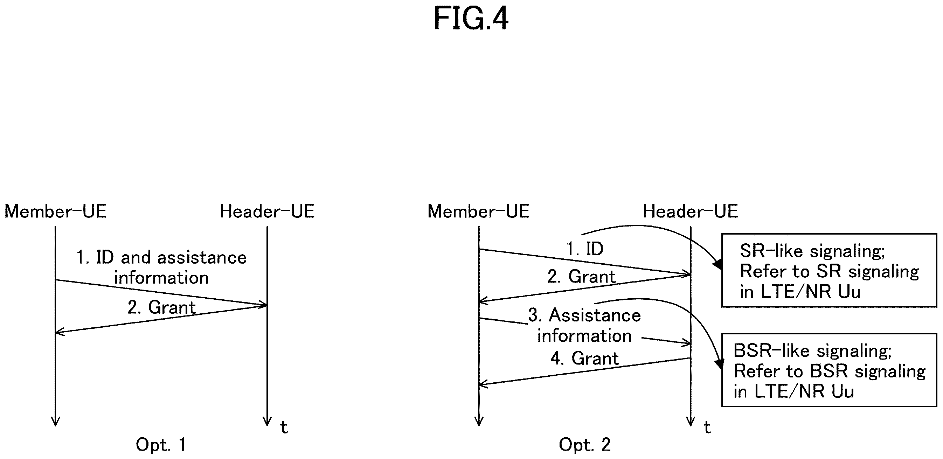

FIG. 4 is a drawing for explaining one or more stages of signaling of a resource request.

As an option 1, signaling of a resource request may be constituted in a single stage, and a scheduling request and assistance information (or parts thereof) may be transmitted by using the single stage of signaling. Identifier information may be included in the scheduling request or may be included in the assistance information.

According to the option 1, a time it takes to signal a resource request can be reduced, and low latency can be achieved.

As an option 2, signaling may be constituted in two stages, in which a scheduling request is transmitted in signaling of a first stage, and assistance information (or a part thereof) may be transmitted in signaling of a second stage. Identifier information may be included in the scheduling request, or may be included in the assistance information.

The signaling in the first stage may be an SR-like signaling that refers to SR (Scheduling Request) signaling in LTE/NR Uu. The signaling in the second stage may be a BSR-like signaling that refers to BSR (Buffer Status Report) signaling in LTE/NR Uu.

According to the option 2, an operation is similar to an operation in NR Uu, and therefore, the complexity of the user terminal can be simplified.

As an option 3, signaling may be constituted by three or more stages, and the scheduling request and the assistance information may be transmitted in different stages. The identifier information may be included in the scheduling request, or may be included in the assistance information.

In a case where a dedicated resource is allocated for each of the user equipments in the user equipment group, the resource and the user equipment correspond to each other, and therefore, a user equipment identifier included in signaling can be disregarded (refer to SR signaling in LTE/NR Uu).

### <Signaling transmission resource>

Signaling transmission resource will be explained.

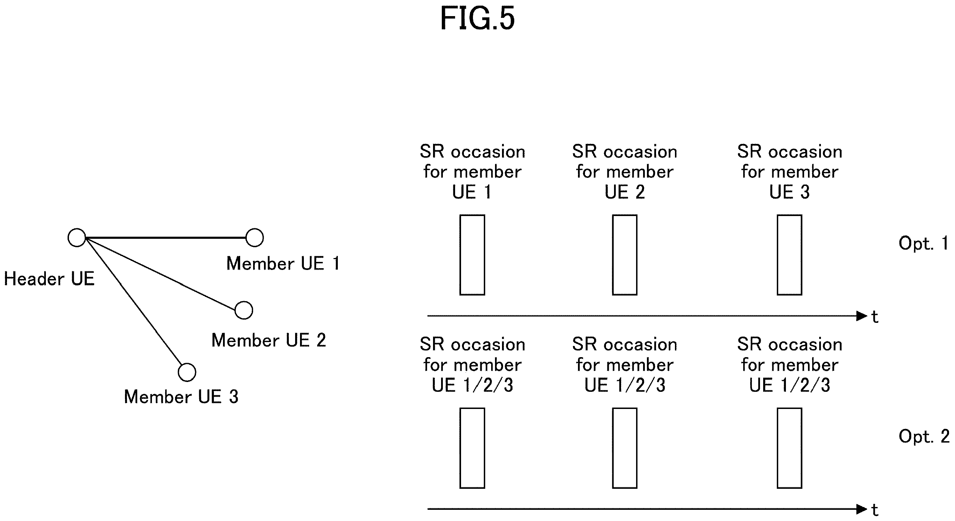

FIG. 5 is a drawing for explaining a signaling transmission resource.

As an option 1 of a signaling transmission resource, a dedicated resource may be configured in advance (preconfigured) for each of the user equipments in the user equipment group, or may be allocated by the header user equipment. In a case where a dedicated resource is configured in advance or allocated for each of the user equipments in the user equipment group, a transmission user identifier may be omitted from the contents included in the signaling. More specifically, the transmission user identifier may not be transmitted.

In a case where it can be assumed that resources that are orthogonal to each other are allocated to a plurality of user equipment groups in proximity, a header user equipment identifier may also be omitted from the contents included in signaling. More specifically, the header user identifier may not be transmitted.

According to the option 1, contention of resource requests can be avoided, and the reliability of a resource request can be improved.

As an option 2 of a signaling transmission resource, a common resource may be configured in advance (preconfigured) for user equipments in the user equipment group, or may be allocated by the header user equipment. For example, a member user equipment may autonomously selects a predetermined resource from among common resources by making a random selection.

According to the option 2, physical resources used for resource requests can be reduced.

As an option 3 of a signaling transmission resource, which of the option 1 or the option 2 is to be used may be configured in advance, implemented in the user equipment, or notified by the header user equipment. For example, the option 1 may be applied to some of the user equipments in the same user equipment group, and the option 2 may be applied to several other user equipments. In a case where signaling transmission in two or more stages is assumed in a resource request, the option 1 or the option 2 may be applied to each stage. For example, the option 2 may be applied to a first stage for transmitting a scheduling request (for example, using SR-like signaling), and the option 1 may be applied to the second stage transmitting assistance information (for example, using BSR-like signaling).

FIG. 5 is a drawing for explaining a signaling transmission resource.

In the option 1 of a signaling transmission resource, dedicated resources are allocated to the member user equipment 1, the member user equipment 2, and the member user equipment 3, and it is shown that a scheduling request occasion (SR occasion) by the member user equipment 1, a scheduling request occasion by the member user equipment 2, and a scheduling request occasion by the member user equipment 3 do not overlap each other.

In the option 2 of a signaling transmission resource, a common resource is allocated to the member user equipment 1, the member user equipment 2, and the member user equipment 3, and it is shown that scheduling request occasions by the member user equipment 1, the member user equipment 2, and the member user equipment 3 can overlap each other.

In order to receive signaling from the member user equipment, it may be specified, configured in advance, or implemented on a user equipment that the header user equipment does not transmit on a resource overlapping the signaling transmission resource (overlapping in time domain).

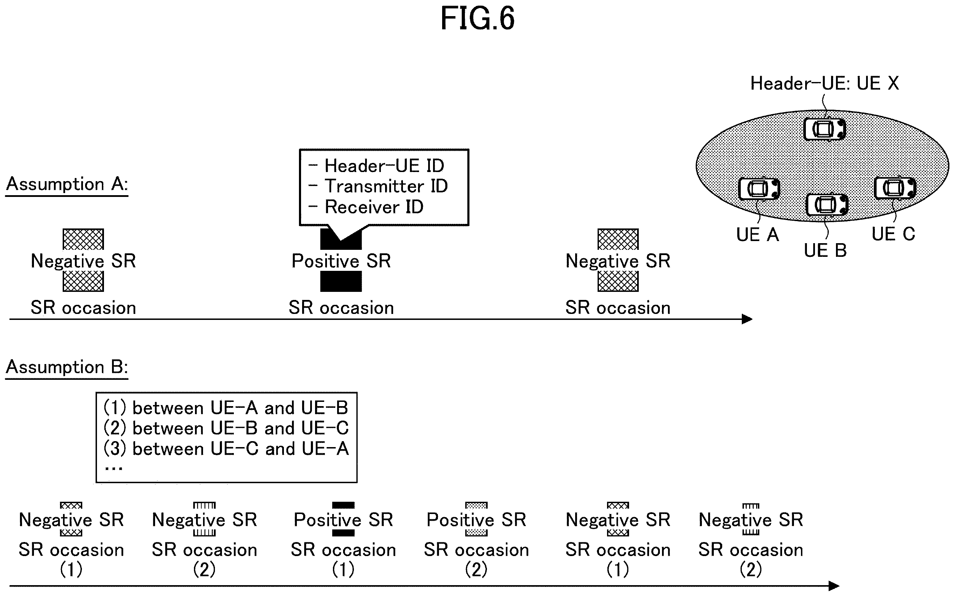

FIG. 6 is a drawing for explaining an option 1 of a signaling transmission resource.

In an option 1 of a signaling transmission resource, an SR-like dedicated signaling using a dedicated resource for each user equipment in the user equipment group is assumed.

As an assumption A, a dedicated resource for each member user equipment in the user equipment group is assumed. In the assumption A of FIG. 6, a scheduling request occasion (SR occasion) for each member user equipment is shown.

As an assumption B, a dedicated resource for each communication link between user equipments in the user equipment group is assumed. In the assumption B of FIG. 6, a scheduling request occasion for a communication link (1) between the user equipment A and the user equipment B, a scheduling request occasion for a communication link (2) between the user equipment B and the user equipment C, and a scheduling request occasion for a communication link (3) between the user equipment C and the user equipment A are shown.

### <Signaling transmission channel>

Signaling transmission channel will be explained.

As an option 1 of a signaling transmission channel, a new channel may be specified. For example, positions of channels may be configured in advance. The channels may be multiplexed with PSCCH or PSSCH/PSFCH by time-division multiplexing or frequency-division multiplexing. Sequence-based channels may also be supported. For example, a sequence that can be used for each user equipment group may be set in advance, or may be generated based on a header user equipment identifier.

As an option 2 of a signaling transmission channel, existing PSCCH or PSSCH/PSFCH may be reused for signaling transmission. For example, data/SCI/SFCI and resource may be shared. (A resource request and other data/SCI/SFCI may be transmitted together in a resource request transmission resource.)

In a case where signaling transmission of a resource request in two or more stages is assumed, a channel is considered to be applied for each stage. For example, PSFCH may be used in a first stage for transmitting a scheduling request (for example, using SR-like signaling), and BSSCH may be used in a second stage for transmitting assistance information (for example, using BSR-like signaling).

As an option 3 of a signaling transmission resource, which of the option 1 or the option 2 is to be used may be configured in advance, implemented in the user equipment, or notified by the header user equipment. In a case where signaling transmission in two or more stages is assumed, a channel is considered to be applied for each stage. For example, an option 2 (reuse of existing channel) may be applied to a first stage for transmitting a scheduling request (for example, using SR-like signaling), and an option 1 (new channel) may be applied to a second stage for transmitting assistance information (for example, using BSR-like signaling).

### <Signaling of resource grant>

Signaling of a resource grant according to the present embodiment will be explained.

When a transmission resource is allocated to a transmitting user equipment, a header user equipment transmits a scheduling grant signaling (hereinafter referred to as "SGI (scheduling grant information)" signaling). SGI (scheduling grant information) may be defined as one of the SCI formats. In order to distinguish SGI from other SCIs, scrambling RNTI, size, dedicated field in SCI, special combination of SCI fields, and the like may be used. The user equipment that receives the SGI transmitted to the user equipment itself transmits PSCCH and/or PSSCH and/or PSFCH on the basis of the SGI.

By defining SGI as one of the SCI formats, the reception processing can be performed in a manner similar to other SCI formats, and the complexity of the terminal can be simplified.

With the grant signaling, a transmitting user equipment identifier and a receiving user equipment identifier may be transmitted.

The identifier may be a UE ID or an RNTI (Radio Network Temporary Identifier), or may be a part of a UE ID or a part of an RNTI.

MCS, SCI/data resource indication, CSI/HARQ-ACK resource indication, CRC, HARQ process number, new data indication, layer number, CSI request, other SCI format fields may be transmitted with grant signaling.

The signaling may be PHY layer signaling or signaling in upper layers.

The signaling may be transmitted using PSCCH or PSSCH/PSFCH, or may be a newly specified SL (sidelink) channel for grant signaling transmission, for example, PSGCH (Physical Sidelink Grant Channel).

### <Apparatus configuration>

Next, an example of functional configuration of the base station apparatus 10 and the user equipment 20 that execute the processing and operations described so far will be described. The base station apparatus 10 and the user equipment 20 include a function for implementing the above-described embodiment. However, each of the base station apparatus 10 and the user equipment 20 may have only some of the functions in the embodiment.

### <Base station apparatus 10>

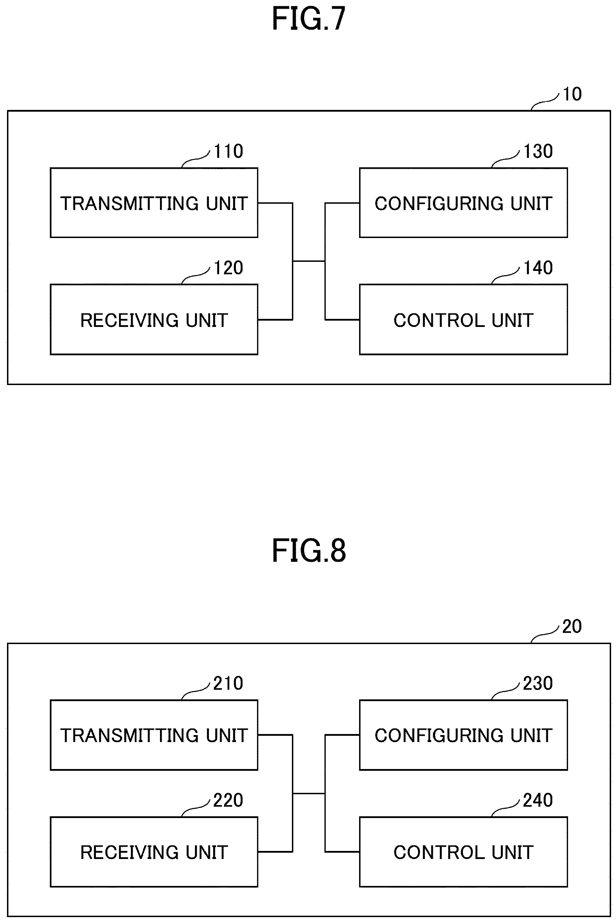

FIG. 7 is a drawing illustrating an example of a functional configuration of the base station apparatus 10. As illustrated in FIG. 7, the base station apparatus 10 includes a transmitting unit 110, a receiving unit 120, a configuring unit 130, and a control unit 140. The functional configuration illustrated in FIG. 7 is only an example. As long as the operation according to the embodiment of the present invention can be executed, the functions may be divided in any way, and the functional units may be given any names.

The transmitting unit 110 includes a function of generating signals to be transmitted to the user equipment 20 and wirelessly transmitting the signals. Also, the transmitting unit 110 transmits information such as SL scheduling and the like to the user equipment 20. The receiving unit 120 includes a function of receiving various types of signals transmitted from the user equipment 20 and acquiring, for example, information on a higher layer from the received signals.

The configuring unit 130 stores configuration information configured in advance and various configuration information to be transmitted to the user equipment 20 in a storage device and reads out the configuration information from the storage device as needed. The contents of the configuration information are, for example, information about configuration of V2X, and the like.

As explained in the embodiment, the control unit 140 performs processing related to configuration with which the user equipment 20 performs V2X. A functional unit configured to transmit signals in the control unit 140 may be included in the transmitting unit 110, and a functional unit configured to receive signals in the control unit 140 may be included in the receiving unit 120.

### <User equipment 20>

FIG. 8 is a drawing illustrating an example of a functional configuration of the user equipment 20. As illustrated in FIG. 8, the user equipment 20 includes a transmitting unit 210, a receiving unit 220, a configuring unit 230, and a control unit 240. The functional configuration illustrated in FIG. 8 is merely an example. As long as the operation according to the embodiment of the present invention can be executed, the functions may be divided in any way, and the function units may be given any names.

The transmitting unit 210 generates a transmission signal from transmission data and wirelessly transmits the transmission signal. The receiving unit 220 wirelessly receives various types of signals, and acquires a signal in a higher-layer from the received signal in the physical layer. Also, the receiving unit 220 has a function of receiving SL scheduling that is transmitted from the base station apparatus 10. The receiving unit 220 has a function of receiving a scheduling grant transmitted from another user equipment. For example, the transmitting unit 210 transmits, as V2X, a scheduling request and the like to another user equipment 20, and the receiving unit 120 receives a scheduling grant and the like from another user equipment 20.

The configuring unit 230 stores in a storage device various types of configuration information received from the base station apparatus 10 or the user equipment 20 by the receiving unit 220 and reads out the configuration information from the storage device as needed. The configuring unit 230 also stores configuration information configured in advance. The contents of the configuration information are, for example, information about V2X and HARQ processing, and the like.

As explained in the embodiment, the control unit 240 controls D2D communication executed with another user equipment 20. Also, the control unit 240 executes V2X and HARQ processing. A functional unit configured to transmit signals in the control unit 240 may be included in the transmitting unit 210, and a functional unit configured to receive signals in the control unit 240 may be included in the receiving unit 220.

### <Hardware configuration>

The functional configuration diagrams (FIGs. 7 and 8) used to explain the embodiment of the present invention described above illustrate blocks in units of functions. These functional blocks (constituting units) are implemented by any combinations of at least one of hardware and software. Further, the means for realizing each functional block is not particularly limited. That is, each functional block may be implemented by one device in which a plurality of elements are united physically and logically. Alternatively, each functional block may be implemented by connecting directly and/or indirectly (for example, in a wired and/or wireless manner) two or more devices that are physically or logically separated and using these multiple devices.

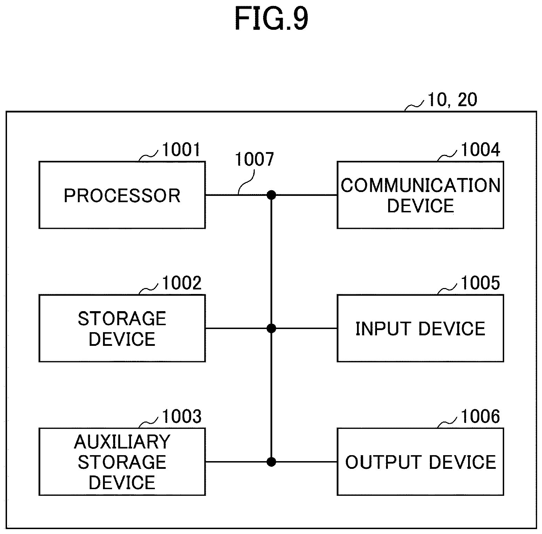

For example, any of the base station apparatus 10, the user equipment 20, and the like according to one embodiment of the present invention may function as a computer that performs processing according to an embodiment of the present invention. FIG. 9 is a drawing illustrating an example of a hardware configuration of a wireless communication apparatus which is the base station apparatus 10 or the user equipment 20 according to an embodiment of the present invention. Each of the base station apparatus 10 and the user equipment 20 explained above may be physically configured as a computer apparatus including a processor 1001, a storage device 1002, an auxiliary storage device 1003, a communication device 1004, an input device 1005, an output device 1006, a bus 1007, and the like.

It is noted that, in the following description, the term "device" may be read as a circuit, an apparatus, a unit, or the like. The hardware configurations of the base station apparatus 10 and the user equipment 20 may be configured to include one or more of the devices illustrated in drawings as 1001 to 1006, or may be configured not to include some of the devices.

Each function of the base station apparatus 10 and the user equipment 20 may be implemented by reading predetermined software (program) to hardware such as the processor 1001, the storage device 1002, or the like, causing the processor 1001 to perform operations, controlling communication by the communication device 1004, and controlling at least one of reading and writing of data in the storage device 1002 and the auxiliary storage device 1003.

The processor 1001 executes, for example, an operating system to control the overall operation of the computer. The processor 1001 may be a central processing unit (CPU) including an interface with peripheral devices, a control device, an arithmetic device, a register, and the like.

The processor 1001 reads a program (program code), a software module, or data from at least one of the auxiliary storage device 1003 and the communication device 1004 onto the storage device 1002, and performs various processes according to the program, the software module, or the data. As the program, a program that causes a computer to perform at least some of the operations described in the embodiment explained above is used. For example, a transmitting unit 110, a receiving unit 120, a configuring unit 130, and a control unit 140 of the base station apparatus 10 illustrated in FIG. 7 may be implemented by a control program that is stored in the storage device 1002 and that is executed by the processor 1001. For example, a transmitting unit 210, a receiving unit 220, a configuring unit 230, and a control unit 240 of the user equipment 20 illustrated in FIG. 8 may be implemented by a control program that is stored in the storage device 1002 and that is executed by the processor 1001. Explanation has been provided above for the case in which the above various processing are performed by the single processor 1001. However, such processing may be simultaneously or sequentially performed by two or more processors 1001. The processor 1001 may be implemented with one or more chips. It is noted that the program may be transmitted from a network through an electronic communication line.

The storage device 1002 is a computer-readable recording medium and may be constituted by at least one of, for example, a ROM (Read Only Memory), an EPROM (Erasable Programmable ROM), an EEPROM (Electrically Erasable Programmable ROM), a RAM (Random Access Memory), and the like. The storage device 1002 may also be referred to as a register, a cache, a main memory (main storage device), or the like. The storage device 1002 can store a program (program code), a software module and the like that can be executed to perform processing according to an embodiment of the present invention.

The auxiliary storage device 1003 is a computer-readable recording medium and may be configured by at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and the like. The auxiliary storage device 1003 may be referred to as an auxiliary storage device. The above storage medium may be, for example, a database, a server, or other appropriate media including at least one of the storage device 1002 and the auxiliary storage device 1003.

The communication device 1004 is hardware (transmission and reception device) for performing communication between computers via a wired and/or wireless network, and is also referred to as, for example, a network device, a network controller, a network card, a communication module, or the like. For example, the transmitting unit 110 and the receiving unit 120 of the base station apparatus 10 may be implemented by the communication device 1004. The transmitting unit 210 and the receiving unit 220 of the user equipment 20 may be implemented by the communication device 1004.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It is noted that the input device 1005 and the output device 1006 may be integrated with each other (for example, a touch panel).

The devices, such as the processor 1001 and the storage device 1002, are connected to each other via a bus 1007 for communicating information. The bus 1007 may be constituted by using a single bus, or may be constituted by using busses different depending on devices.

The base station apparatus 10 and the user equipment 20 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be implemented with at least one of these hardware components.

### <Summary of Embodiment>

As described above, according to an embodiment of the present invention, provided is a user equipment including a transmitting unit configured to transmit a scheduling request, and a receiving unit configured to receive a scheduling grant, wherein the scheduling request includes at least one of a header user equipment identifier, a transmitting user equipment identifier, and a receiving user equipment identifier.

According to the above configuration, a technique for specifying a signaling of a resource request from a member user equipment to a header user equipment in inter-terminal direct communication is provided.

### <Supplements to Embodiment>

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiments, the orders of steps may be changed unless a contradiction arises. For the sake of convenience for describing the processing, the base station apparatus 10 and the user equipment 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user equipment 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as L LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and a next-generation system expanded on the basis thereof.

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station apparatus 10 described in the present disclosure may in some cases be performed by an upper node. It is clear that, in a network that includes one or more network nodes including the base station apparatus 10, various operations performed for communication with the user equipment 20 can be performed by at least one of the base station apparatus 10 and another network node other than the base station apparatus 10 (for example, a MME, a S-GW, or the like may be mentioned, but not limited thereto). In the above, the description has been made for the case where another network node other than the base station apparatus 10 is a single node as an example. But the another network node may be a combination of a plurality of other network nodes (for example, a MME and a S-GW).

Each aspect and embodiment described in the present specification may be used alone, in combination, or may be switched according to execution.

By the person skilled in the art, the user equipment 20 may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

The base station apparatus 10 may also be referred to by those skilled in the art as NB (NodeB), eNB (evolved NodeB), gNB, base station, or some other appropriate terminology.

The terms "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination.

A term "based on" used in the present specification does not mean "based on only" unless otherwise specifically noted. In other words, a term "base on" means both "based on only" and "based on at least".

In a case where any one of "include", "including", and variations thereof is used in the present specification or claims, each of these terms is intended to be inclusive in the same way as the term "comprising". Further, the term "or" used in the present specification or claims is intended to be not exclusive-or.

Throughout the present disclosure, in a case where an article such as "a", "an", or "the" in English is added through a translation, these articles indicates that those of multiple numbers can also be included, unless the context clearly indicates otherwise.

In the embodiment of the present invention, the resource request is an example of a scheduling request, the resource grant is an example of a scheduling grant, and the scheduling user equipment is an example of a header user equipment.

Although the present invention has been described above, it will be understood by those skilled in the art that the present invention is not limited to the embodiment described in the present specification. Modifications and changes of the present invention may be possible without departing from the subject matter and the scope of the present invention defined by claims. Therefore, the descriptions of the present specification are for illustrative purposes only, and are not intended to be limiting the present invention in any way.

### Reference Signs List

- 10: base station apparatus
- 110: transmitting unit
- 120: receiving unit
- 130: configuring unit
- 140: control unit
- 20: user equipment
- 210: transmitting unit
- 220: receiving unit
- 230: configuring unit
- 240: control unit
- 1001: processor
- 1002: storage device
- 1003: auxiliary storage device
- 1004: communication device
- 1005: input device
- 1006: output device

## Claims

1. A user equipment comprising:
a transmitting unit configured to transmit a scheduling request; and
a receiving unit configured to receive a scheduling grant,
wherein the scheduling request includes at least one of a header user equipment identifier, a transmitting user equipment identifier, and a receiving user equipment identifier.

2. The user equipment according to claim 1,
wherein the transmitting unit further transmits assistance information.

3. The user equipment according to claim 2,
wherein the transmitting unit transmits the scheduling request and the assistance information by dividing a transmission into one or more stages.

4. The user equipment according to claim 1,
wherein the transmitting unit transmits the scheduling request by using a predetermined resource.

5. The user equipment according to claim 1,
wherein the transmitting unit transmits the scheduling request by using a predetermined channel.

6. A communication method of a user equipment, comprising:
a transmission step of transmitting a scheduling request; and
a reception step of receiving a scheduling grant,
wherein the scheduling request includes at least one of a header user equipment identifier, a transmitting user equipment identifier, and a receiving user equipment identifier.
